# EUROPEAN PATENT APPLICATION

(11) **EP 4 685 001 A1**
(43) Date of publication of application: **28.01.2026**
(21) Application number: 25190503.0
(22) Date of filing: 18.07.2025
(51) Int. Cl.: B60L 7/22, B60L 7/24, B60L 58/12, B60L 15/20, B60T 13/58, B60W 30/18, B60T 1/10, B60T 5/00, F16D 61/00, F16D 65/78, H01C 1/082

(54) **ELECTRIC-POWERED ROAD VEHICLE AND METHOD FOR OPERATING SUCH VEHICLE**

(30) Priority: 26.07.2024 IT 202400017464
(71) Applicant: FERRARI S.p.A., 41100 Modena (IT)
(72) Inventor: LO CALZO, Giovanni, 41100 MODENA (IT); MONTEBELLO, Christian, 41100 MODENA (IT); TANCREDI, Fabio, 41100 MODENA (IT); ALOISI, Andrea, 41100 MODENA (IT); COLLETT, Nicholas Edward, 41100 MODENA (IT); SITTA, Ugo, 41100 MODENA (IT)
(74) Representative: Studio Torta S.p.A.

(57) **Abstract**

An electric-powered road vehicle; wherein the vehicle comprises two front wheels and two rear wheels; at least one battery; at least one electric machine configured to convert electrical energy to kinetic energy and vice versa; the electric machine being connected, on one side, to at least one battery and, on another side, to at least one of said wheels in such a way that during the running or acceleration of the vehicle the electric machine converts incoming electrical energy arriving from the battery into kinetic energy to be transmitted to at least one of said wheels; at least one dissipative braking device to convert the kinetic braking energy of at least one of said wheels into heat; the vehicle also comprises a resistor device connected to the electric machine and configured to convert incoming electrical energy arriving from the electric machine into heat; with the battery in a fully charged state or part of the kinetic braking energy from at least one of said wheels is converted by the electric machine into electrical energy transmitted to the resistor device and there converted into heat.

## Description

### CROSS-REFERENCE TO RELATED APPLICATIONS

This patent application claims priority from Italian patent application no. 102024000017464 filed on July 26, 2024, the entire disclosure of which is incorporated herein by reference.

### TECHNICAL FIELD

The technical field of this invention relates to the field of electric-powered road vehicles, that is, road vehicles equipped with an electric machine powered by a battery that converts incoming electrical energy into outgoing kinetic energy to be transferred to the wheels during driving or acceleration. For the purposes of this invention, the term "electric vehicles" means both vehicles with only electric propulsion and vehicles with dual electric and endothermic propulsion. In this context, this invention relates in particular to the braking system of an electric vehicle, where the term "braking system" means all devices involved in braking.

### PRIOR ART

As is well known, a road vehicle comprises at least one engine downstream of which kinetic energy is transferred to the wheels during driving or acceleration. If the engine is an endothermic one, the fuel combustion cycles move the engine pistons and this motion is transferred to the wheels. During braking, kinetic energy is dissipated for these types of cars by conversion into heat through friction between brake pads and brake discs. These braking systems are known as "dissipative" braking systems and to this end these discs and pads are appropriately designed in terms of both materials and dimensions.

In an electric vehicle (whether hybrid or "full electric"), there is at least one electric machine powered by a battery that converts incoming electrical energy into outgoing kinetic energy to be transferred to the wheels during driving or acceleration. As is well known, an electric machine of these vehicles is also able to run in the opposite direction in order to utilise the incoming kinetic braking energy into current output to the battery. This braking system is known as a "regenerative" braking system. According to the above, therefore, an electric vehicle could also potentially be equipped with only "regenerative" braking systems. However, electric vehicles are also currently equipped with classic "dissipative" braking systems in which the kinetic braking energy is directly converted into frictional heat between the brake discs and pads. The reason for this lies in the fact that when the battery is charged, it cannot receive any additional current and, therefore, "regenerative" braking cannot be implemented with a charged battery.

In this context, this invention will address the problem of how to manufacture an electric vehicle that can perform "regenerative" braking when there is a possibility of charging the battery and that has a "dissipative" braking system that is lighter, more compact and simpler than the prior art without compromising the correct braking, even when the battery is charged, when the electric car cannot transfer current to the battery.

### DESCRIPTION OF THE INVENTION

The purpose of this invention is, therefore, to provide an electric-powered road vehicle that can overcome the drawbacks described above.

The starting point of this invention is an electric-powered road vehicle; wherein this vehicle comprises:
- two front wheels and two rear wheels;
- at least one battery;
- at least one electric machine configured to convert electrical energy into kinetic energy (and vice versa); wherein the electric machine is connected, on one side, to the at least one battery and, on another side, to at least one of said wheels in such a way that during the vehicle's running or acceleration the electric machine converts incoming electrical energy arriving from the battery into kinetic energy to be transmitted to at least one of said wheels;
- at least one dissipative braking device to directly convert the kinetic braking energy of at least one of said wheels into heat.

All these elements and how they work together is known to the person skilled in the art.

The main aspect of this invention is to have provided a resistor device connected to the electric machine and configured to convert incoming electrical energy arriving from the electric machine into heat as a new add-on element of the vehicle. From the following description, it will become clear how this resistor allows the dissipative braking device to be manufactured in a lighter, more compact and simpler form because, even with a charged battery, in any case only part of the kinetic braking energy will be dissipated by the dissipative braking device connected directly to the wheel (brake disc).

In fact, thanks to this invention with the battery in a fully charged state, braking can take place in the following ways:
a) the dissipative braking device is even inoperative and all the kinetic braking energy from at least one of said wheels is converted by the electric machine into electrical energy transmitted to the resistor device and there converted into heat; or
b) only part of the kinetic braking energy from at least one of said wheels is dissipated by the dissipative braking device, and the remaining part is converted by the electric machine into electrical energy transmitted to the resistor device and there converted into heat (C).
   Advantageously, the innovative resistor can also be used when the battery is not fully charged. In this case, braking can take place in the following ways:
c) the dissipative braking device is inoperative and all the kinetic braking energy from at least one of said wheels is transmitted to the electric machine where it is converted into electrical energy; from there, part of the electrical energy is sent to the battery for charging and the remainder to the resistor device to be converted into heat; or
d) part of the kinetic braking energy from at least one of said wheels is dissipated by the dissipative braking device and the remaining part is converted by the electric machine into electrical energy; from here, the electrical energy output from the electric machine is sent partly to the battery for charging and the remaining part to the resistor device to be converted into heat.

The figures and the following description will refer to different ways of manufacturing the resistor and how the heat produced can be transferred to the vehicle's cooling circuit.

### LIST OF FIGURES

This invention will now be described with reference to the accompanying drawings that illustrate some non-limiting embodiments thereof, in which:
- Figure 1 is a schematic view of an electric vehicle;
- Figure 2 is a schematic view of some elements included in the electric vehicle according to the prior art;
- Figures 3 to 6 show different use configurations of the elements in Figure 2;
- Figure 7 is a schematic view of this invention with the innovative resistor introduced in the prior art configuration in Figure 2;
- Figure 8 shows the use configuration of the elements in Figure 7 during vehicle acceleration;
- Figures 9 and 10 show two different use configurations of the elements in Figure 7 when the vehicle is braking and with a fully charged battery;
- Figures 11-14 show four different use configurations of the elements in Figure 7 when the vehicle is braking and with a battery that is not fully charged;
- Figure 15 is a schematic view of this invention in which the innovative resistor in Figure 7 is also connected to the vehicle's liquid cooling circuit;
- Figures 16 to 21 schematically show different air-cooled resistors (Fig 16) or liquid-cooled resistors (17-21) that are cooled by means of the cooling fluid from the vehicle's cooling circuit.

### DESCRIPTION OF THE FIGURES

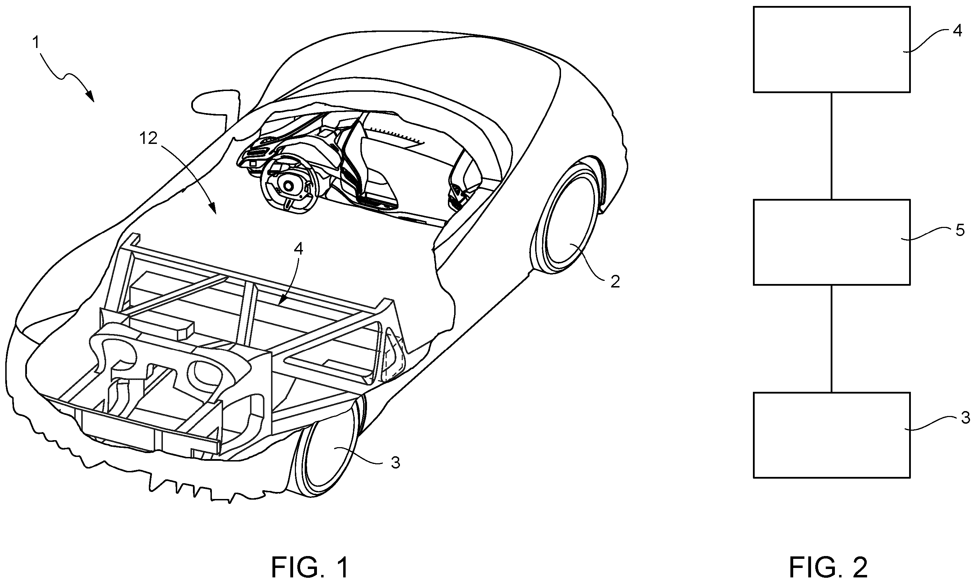

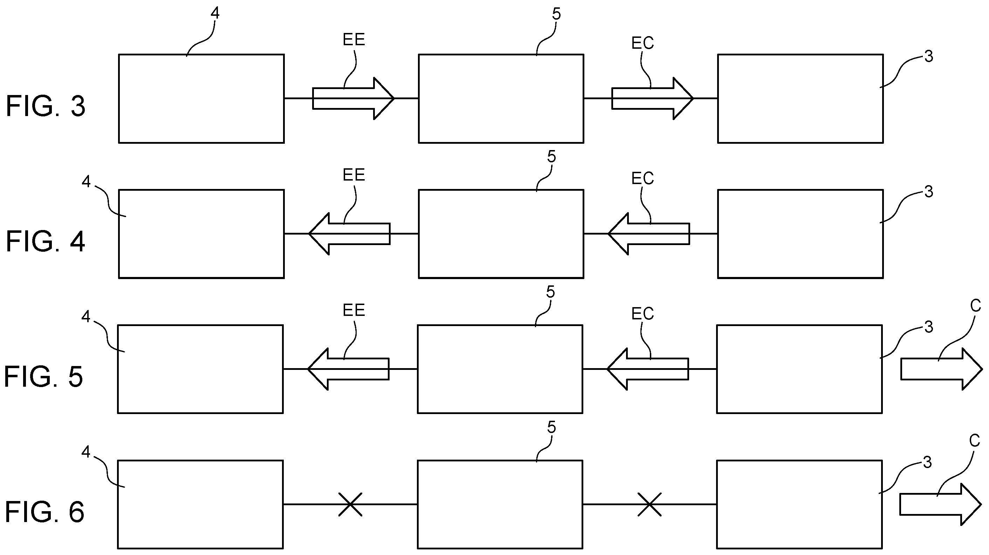

Figure 1 is a schematic view of an electric vehicle. In particular, a vehicle 1 with front wheels 3, rear wheels 3, and a chassis 12 is shown. Reference number 4 in Figure 1 schematically depicts a battery 4. The vehicle 1 is actually an electric vehicle. In this sense, Figure 2 is a schematic view using a block diagram of some elements in the electric vehicle 1. The element marked 5 and placed between the battery 4 and the wheel 3 is an electric machine. The connection between the battery 4 and the electric machine is essentially electric, while the connection between the electric car 5 and the wheel 3 is essentially mechanical, because when the vehicle is running or accelerating, the electric machine 5 is driven by electrical energy drawn from the battery 4 and converts this electrical energy into kinetic energy to transfer to the wheel. Figure 3 schematically depicts what has just been described.

Figures 4 to 6 show three different configurations of the above elements that can be implemented during vehicle 1 braking. In particular, the electric machine 5 can also convert kinetic energy that comes to it during braking from the wheel 3 side into electrical energy that it transfers to the battery 4 to recharge it. All the kinetic braking energy of the wheel 3 can be used to recharge the battery or part of the kinetic braking energy of the wheel 3 can be used to recharge the battery (Fig. 4). In this case (Fig. 5), the remaining part is dissipated by the dissipative braking system on the wheel (brake disc). However, if the battery is fully charged during braking, all the kinetic braking energy is dissipated by the dissipative braking system (Fig. 6). This is because when the battery is full, no more electrical energy can be transferred to it; therefore, the electric machine cannot be used as a generator. Therefore, according to the prior art, even electric cars that can have regenerative braking systems must still include dissipative braking systems capable of dissipating all the kinetic energy of the wheel as if the vehicle were of the conventional endothermic engine type (without the possibility of a regenerative braking system).

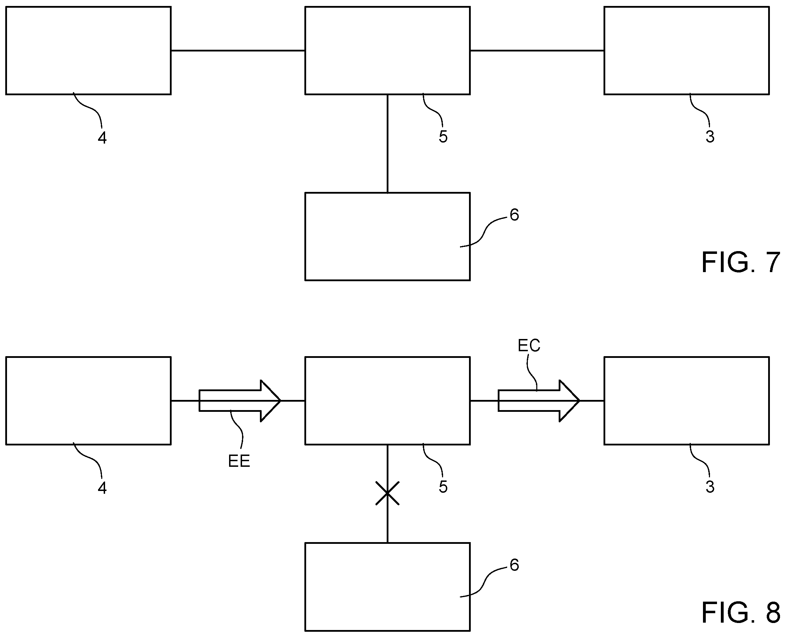

Figure 7 is a schematic view of this invention, in which into the configuration in Figure 2 an additional element has been innovatively added that makes it possible to produce a lighter and simpler dissipative braking device because under all conditions, that is, even when the battery is charged, it will not be the only device involved in braking. In particular, reference number 6 in Figure 1 identifies a resistor device connected to the electric machine 5 and configured to be electrically powered by the latter and to convert this energy into heat (like known resistors).

The presence of this resistor does not minimally interfere during the vehicle's acceleration phases (Figure 8 where the resistor is actually inactive) where the electric machine 5 receives electrical energy from the battery 4 and converts it into kinetic energy to be sent to the wheel 3.

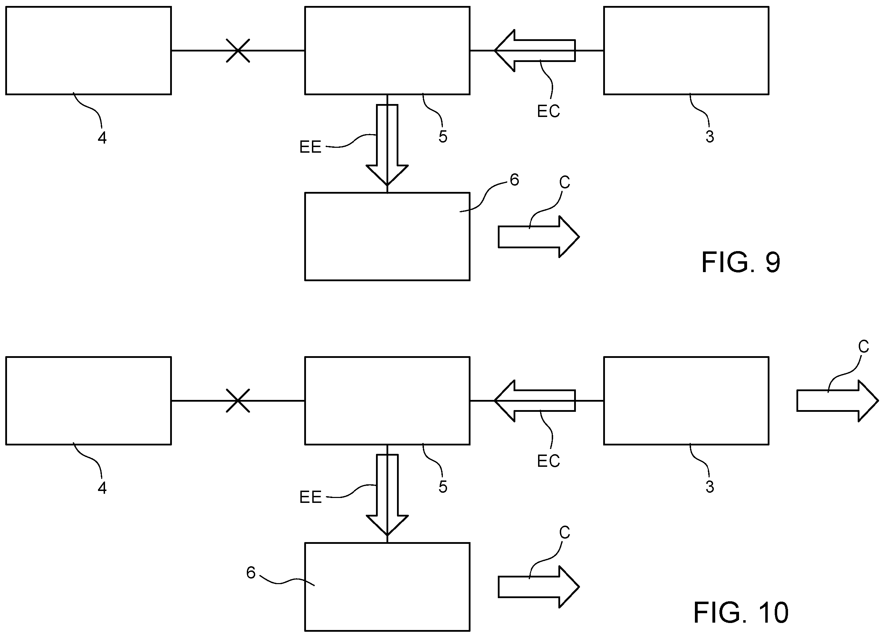

Figures 9 and 10 show two different use configurations of the elements in Figure 7 when the vehicle is braking and with a fully charged battery. In Figure 9, the kinetic braking energy is entirely sent to the electric machine 5 even though the battery 4 is charged because the electric machine has the resistor 6 available to transmit the converted electrical energy to and which must be dissipated into heat in the resistor. In Figure 10, the only difference is that the dissipative braking device of the wheel 3 is active to dissipate only part of the kinetic energy. Since the dissipative braking device is therefore required in these examples to dissipate none or only part of the kinetic energy, its dimensions are smaller than in the prior art.

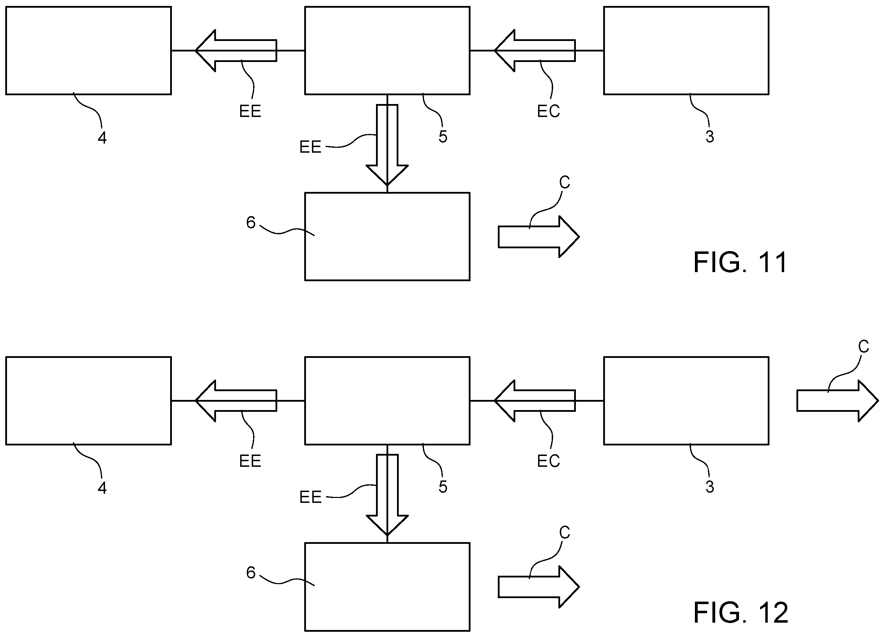

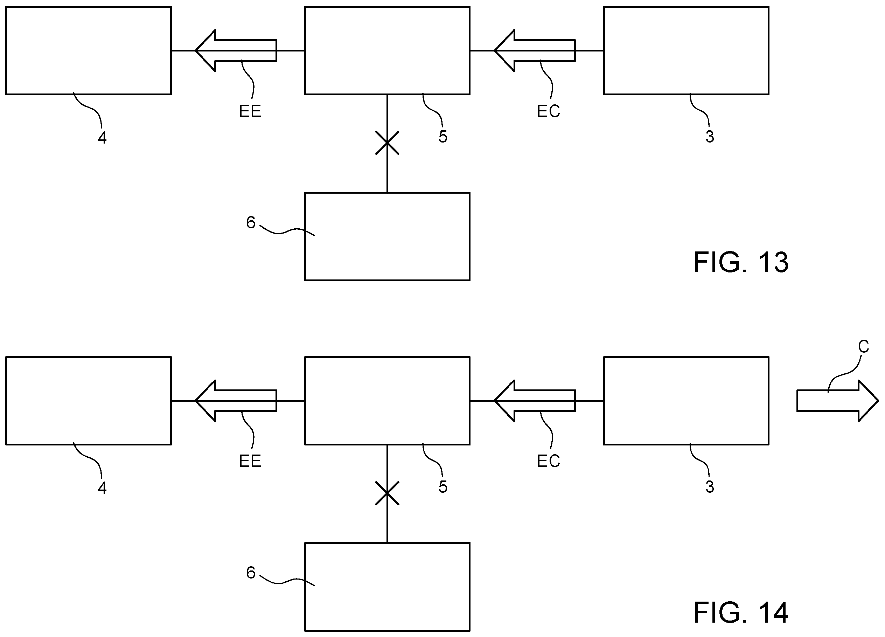

Figures 11-14 show four different use configurations of the elements in Figure 7 when the vehicle is braking and with a fully charged battery. In Figures 13 and 14, the braking configuration is a conventional one in which all the kinetic energy is converted into electrical energy to charge the battery 4, or part is dissipated into heat by the dissipative braking device and part is converted into electrical energy to charge the battery 4. In these examples, the resistor is inactive. In contrast, Figures 11 and 12 show new braking configurations with the battery being charged in which, respectively, part of the kinetic energy is dissipated into heat by the resistor and by the dissipative braking device (Fig. 12) or the dissipative braking device is rendered inactive (Fig. 11).

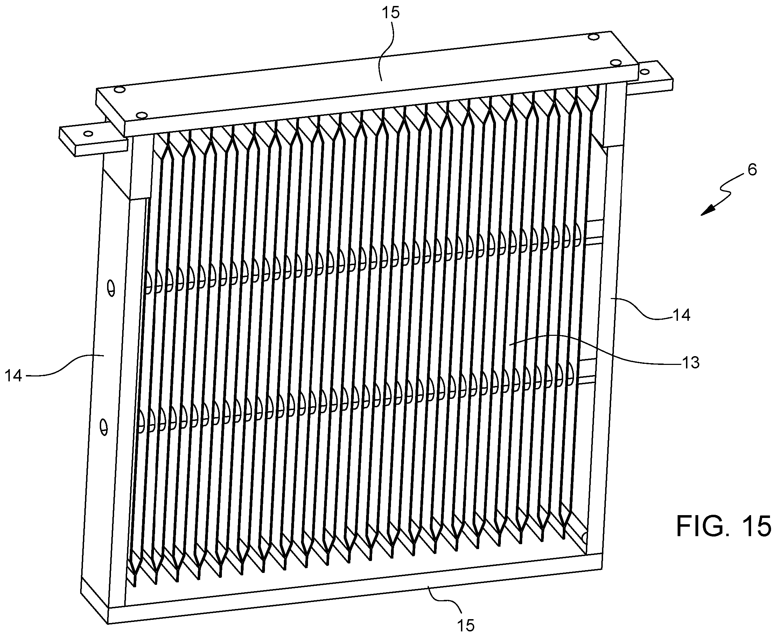

Figure 15 schematically shows an example of an air-cooled resistor of this invention. In this example, the resistor device 6 comprises a coil 13 preferably made of NiCr welded to a partly ceramic 14 and partly aluminium 15 casing. The coils 13 transform incoming electrical energy from the aluminium part into heat that is partly drawn from the air passing among the coils.

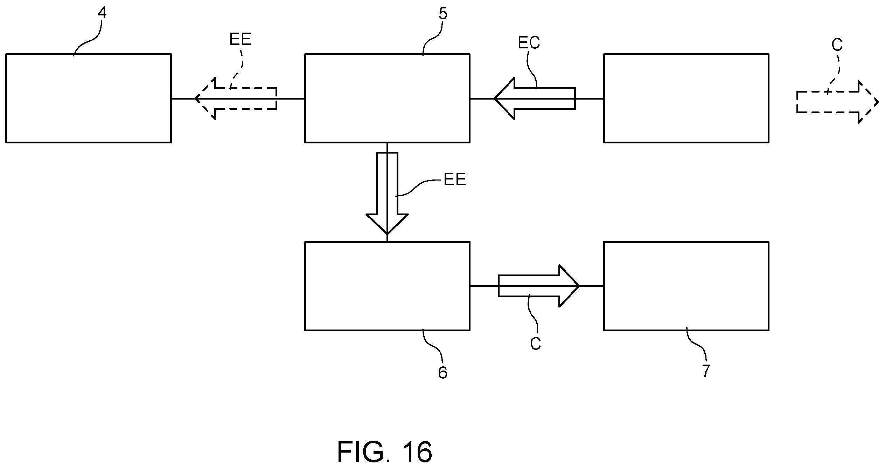

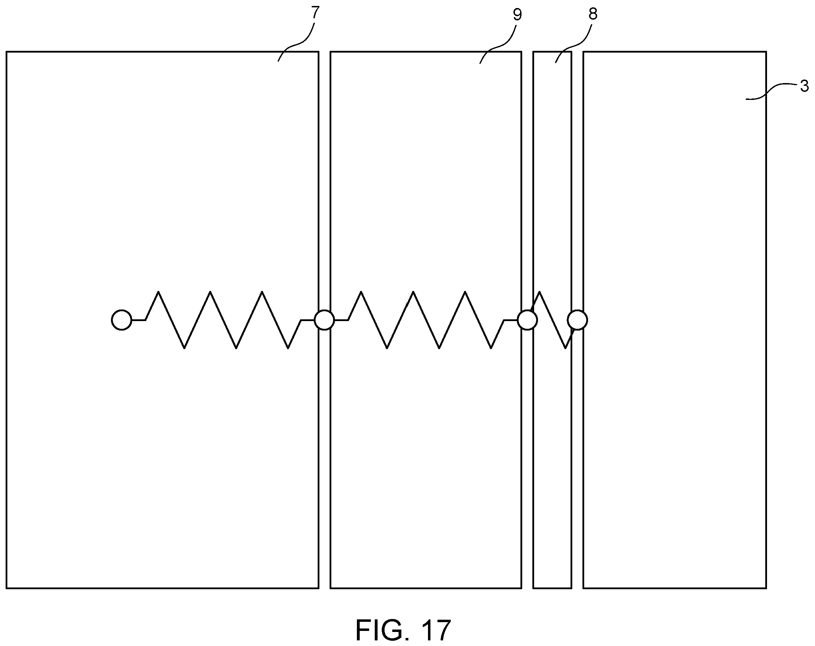

Figure 16 is a schematic view of an embodiment of this invention in which the innovative resistor of the configuration in Figure 7 is also connected to the liquid cooling circuit of the vehicle, schematically depicted with reference number 7 and configured to draw some of the heat C produced by the resistor. Figures 17 to 21 schematically show various resistors that are liquid-cooled by means of the cooling liquid of the vehicle 1 cooling circuit 7. Figure 17 shows an example where the resistor 6 is a panel and the contact with the cooling circuit 7 is mediated by a layer of electrical insulating material 8. In this example too, there is, preferably, an aluminium layer 9 between the layer of electrical insulating material 8 and the cooling circuit 7.

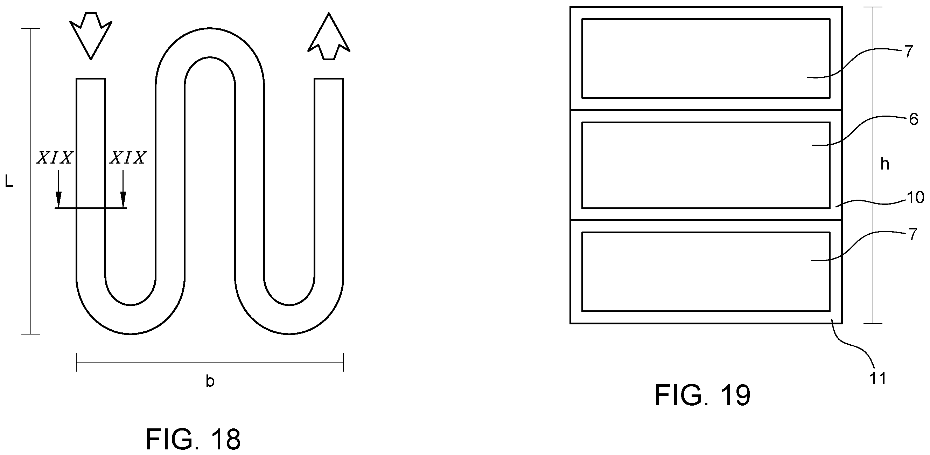

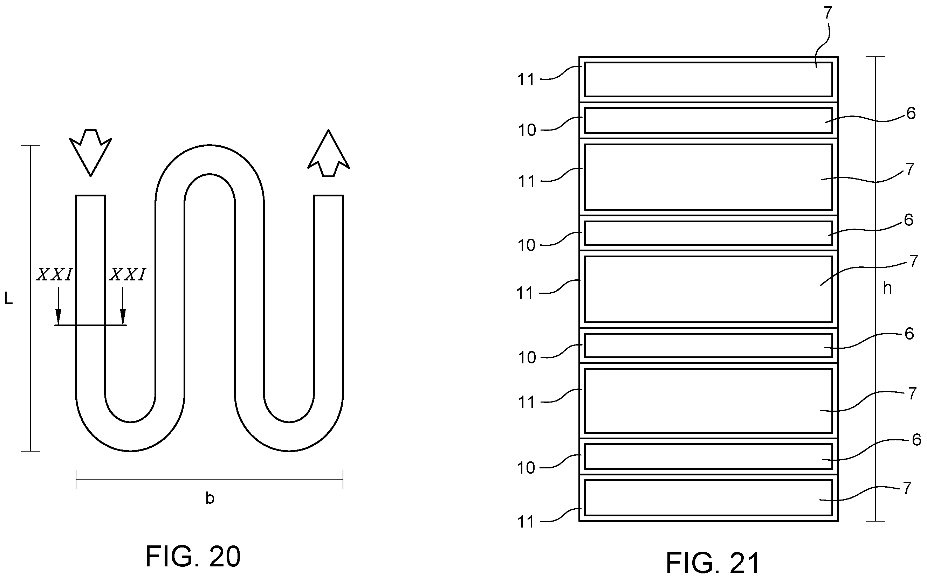

Figures 18 and 19 show an example of a liquid-cooled resistor in which the resistor 6 and the corresponding part of the cooling circuit 7 are shaped like a coil. As can be seen in Figure 19 in this example in cross section, the resistor 6 is the central part of the coil, while the cooling circuit is in contact with its opposite outer walls. In these figures, reference number 10 identifies the insulating coating of the resistor 6 and reference number 11 the walls of the cooling circuit housing the cooling fluid. Figures 20 and 21 show an example similar to the previous figures in which, however, as can be seen in Figure 21, in cross section the coil comprises a plurality of resistors 6 interspersed with corresponding portions of the cooling circuit.

Lastly, it is clear that modifications may be made to the embodiments described and illustrated herein, and variations produced thereto, without departing from the scope of this invention, as set forth in the claims.

## Claims

1. An electric-powered road vehicle (1); wherein the vehicle (1) comprises:
- two front wheels (2) and two rear wheels (3);
- at least one battery (4);
- at least one electric machine (5) configured to convert electrical energy (EE) to kinetic energy (EC) and vice versa; the electric machine (5) being connected on one side to at least one battery (4) and on another side to at least one of said wheels (2, 3) in such a way that during the running or acceleration of the vehicle (1) the electric machine (5) converts incoming electrical energy (EE) arriving from the battery into kinetic energy (EC) to be transmitted to at least one of said wheels (2, 3);
- at least one dissipative braking device to convert the kinetic energy (EC) of braking of at least one of said wheels (2, 3) into heat (C);
**characterised by**
the vehicle (1) also comprising a resistor device (6) connected to the electric machine (5) and configured to convert incoming electrical energy (EE) arriving from the electric machine (5) into heat (C); depending on the state of the battery, the vehicle (1) is then configured to perform the following different braking configurations:
- with the battery in a fully charged state:
a) the dissipative braking device is inoperative and all the kinetic energy (EC) of braking from at least one of said wheels (2, 3) is converted by the electric machine (5) into electrical energy (EE) transmitted to the resistor device and there converted into heat (C); or
b) part of the kinetic energy (EC) of braking from at least one of said wheels (2, 3) is dissipated by the dissipative braking device, and the remaining part is converted by the electric machine (5) into electrical energy (EE) transmitted to the resistor device and there converted into heat (C);
- with the battery not fully charged:
c) all of the kinetic energy (EC) of braking from at least one of said wheels (2, 3) is transmitted to the electric machine (5) where it is converted to electrical energy (EE); wherein the electrical energy (EE) output from the electric machine (5) is sent partly to the battery (4) for charging and the remainder to the resistor device to be converted to heat (C); or
d) part of the kinetic energy (EC) of braking from at least one of said wheels (2, 3) is dissipated by the dissipative braking device and the remaining part is converted by the electric machine (5) into electrical energy (EE); wherein the electrical energy (EE) output from the electric machine (5) is sent partly to the battery (4) for charging and the remaining part to the resistor device to be converted into heat (C).

2. The vehicle as claimed in claim 1, wherein the resistor device is of the air-cooled type.

3. The vehicle as claimed in claim 2, wherein the resistor device comprises a coil preferably made of NiCr welded to a partly ceramic and partly aluminium casing.

4. The vehicle as claimed in claim 1, wherein the resistor device is housed in a high heat capacity salt bath.

5. The vehicle as claimed in claim 1 or 4, wherein the vehicle (1) further comprises a cooling circuit (7); the resistor device being of the liquid-cooled type via the cooling circuit (7).

6. The vehicle as claimed in claim 5, wherein the contact between the resistor (6) and cooling circuit (7) is mediated by a layer of electrical insulating material (8).

7. The vehicle as claimed in claim 6, wherein an aluminium layer (9) is provided between the layer of electrical insulating material (8) and the cooling circuit (7).

8. The vehicle as claimed in claim 5, wherein the resistor (6) and the corresponding part of the cooling circuit are shaped as a coil; wherein, in cross section, the resistor (6) is the central part and the cooling circuit is the outer parts.

9. The vehicle as claimed in claim 5, wherein the resistor (6) and the corresponding portion of the cooling circuit are shaped as a coil; wherein, in cross section, there are a plurality of resistors (6) interspersed with corresponding portions of the cooling circuit.

10. A method of operation of an electric-powered road vehicle (1); wherein the method comprises the steps of:
- providing a vehicle (1) as claimed in claim 1;
- operating the braking according to one of the following modes depending on the state of the battery (4);
wherein with that battery in a fully charged state:
a) converting all kinetic braking energy (EC) to electrical energy (EE); converting electrical energy (EE) to heat (C); or
b) converting part of the kinetic energy (EC) directly to heat (C); converting the remaining part of the kinetic braking energy (EC) to electrical energy (EE); and converting electrical energy (EE) to heat (C);
- with the battery not fully charged:
c) converting all the kinetic braking energy (EC) to electrical energy (EE); using part of the electrical energy (EE) to recharge the battery (4) and converting the remaining part to heat (C); or
d) converting part of the kinetic energy (EC) directly to heat (C) and the remaining part to electrical energy (EE); using part of the electrical energy (EE) to recharge the battery (4) and converting the remaining part to heat (C).
